(19) Europäisches Patentamt
European Patent Office
Office européen des brevets

(11) **EP 3 037 295 A2**

(12) **EUROPÄISCHE PATENTANMELDUNG**

(43) Veröffentlichungstag:
29.06.2016 Patentblatt 2016/26

(51) Int Cl.:
**B60K 35/00** (2006.01) **B60K 37/02** (2006.01)

(21) Anmeldenummer: **15466018.7**

(22) Anmeldetag: **14.12.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **17.12.2014 CZ 20140923**

(71) Anmelder: **Skoda Auto A.S.**
**293 60 Mladá Boleslav (CZ)**

(72) Erfinder: **Vyziblo, Oldrich**
**507 23 Libán (CZ)**

(54) **INFORMATIONSANZEIGEABDECKUNG IM FAHRZEUG**

(57) Die Deckscheibe der Instrumentenanzeige ist im Kombiinstrument des Fahrzeuges angeordnet. Sie dient zur Abdeckung von Displays, Kontrollleuchten und Hinterleuchtung, die im Kombiinstrument des Fahrzeuges angeordnet sind.

Die Darstellung der Erfindung liegt darin, dass die Deckscheibe der Instrumentenanzeige eine Polarisationsschicht aufweist. Die Polarisationsschicht ist in der Deckscheibe integriert und für die polarisierende Abdeckung des Kombiinstrumentes angepasst.

Fig. 1

EP 3 037 295 A2

**Beschreibung**

Technisches Gebiet

Die Erfindung betrifft ein System zur Anzeige von Informationen für den Fahrer und die Insassen im Fahrzeuginterieur unter Nutzung einer geeigneten polarisierenden Deckscheibe dieser im Kombiinstrument angeordneten Instrumentenanzeige an der Schalttafel des Fahrzeuges.

Bisheriger Stand der Technik

Derzeit werden bei Fahrzeugen für die Anzeige von Informationen die Kontrollleuchten (Glühlampen oder LED) mit entsprechenden Symbolen sowie die allgemeine Hinterleuchtung der Instrumentenanzeige im Kombiinstrument verwendet. Den großen Nachteil dieser Lösungen stellt die Reflexion in den Fensterscheiben bei der Fahrt in der Nacht oder bei eingeschränkten Sichtverhältnissen dar. Dies wird insbesondere vom Fahrer störend wahrgenommen und beeinflusst die Lenksicherheit des Fahrzeuges.

Darstellung der Erfindung

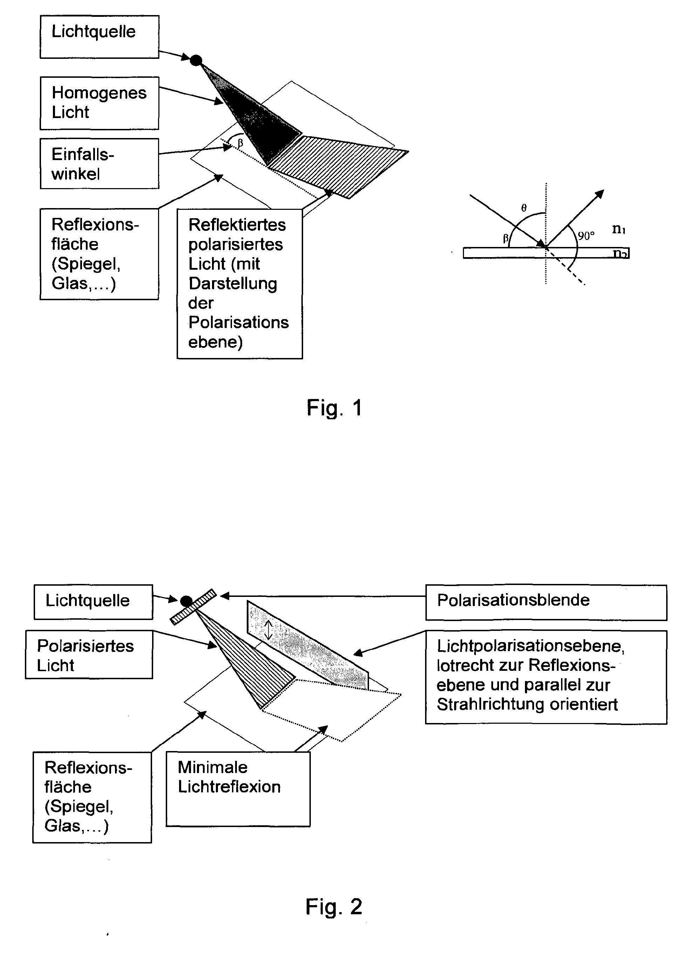

Die Aufgabe wird durch den Einsatz einer geeigneten polarisierenden Deckscheibe dieser Kontrollleuchten, Hinterleuchtung und Displays gelöst. Die vorliegende Erfindung kann auch bei weiteren Geräten, wie z.B. der Bedienung der Klimaanlage, des Radio-, Navigationsgerätes usw. verwendet werden. Die Deckscheibe ist als ein durchsichtiges Schild mit einer Polarisationsschicht in einer geeigneten Ebene ausgeführt. Wenn das Licht die Quelle des polarisierten Lichtstrahles ist, kann die Aufgabe auch durch geeignete Winkeleinstellung der Polarisationsebene gelöst werden. Das Prinzip der Erfindung liegt in der Grundeigenschaft des Lichtes bei einer Reflexion, und zwar dass das reflektierte Licht polarisiert wird. Wird das primäre Licht bereits vor der eigentlichen Reflexion geeignet polarisiert, wird diese minimiert. Das Prinzip wird in Fig. 1 vor dem Einsatz der Maßnahme und in Fig. 2 mit eingesetzter Polarisationsfolie angezeigt. Die Fig. 1 zeigt das Prinzip der Reflexion eines homogenen Lichtes und seiner Polarisation. Beim idealen Einfallswinkel $\beta$ der Strahlen von der Lichtquelle, wenn das reflektierte und gebrochene Licht den Winkel von 90° einschließt, ist das gebrochene Licht nur in einziger Ebene polarisiert. Der Einfallswinkel gegen das Lot $\theta$ ist sog. Brewsterwinkel.

Brewsterwinkel $\theta$ ist definiert als:

$$tg\ \theta = n_2/n_1 \ ,$$

wobei $n_1$ und $n_2$ die Brechungsindizes für jeweilige Umgebung (Luft / Glas) sind.

Für Glas ist typisch ein Brechungswinkel von $1{,}5 \div 2$, woraus sich ein idealer Einfallswinkel ergibt:

$$\beta_{GLAS} = 25° \div 35°$$

Dies ist in meisten Fällen auch der Winkel, unter dem der Fahrer die Reflexion der Displays an der Fensterscheibe sieht. Durch die Verwendung eines geeigneten, in der Deckscheibe des Displays integrierten Polarisationsfilters werden die Reflexionen an Fahrzeugscheiben unterdrückt und die Sicherheit während der Nachtfahrt sowie der Lenkkomfort erhöht.

Je mehr der Winkel des einfallenden polarisierten Lichtes den Bedingungen des Brewster-Winkels entspricht, umso mehr wird die Reflexion unterdrückt.

Je mehr sich die Polarisationsebene des primären Lichtstrahls der zur Reflexionsfläche lotrechten Ebene nähert, desto mehr wird die Reflexion unterdrückt. Für eine richtige Einstellung der Polarisationsebene muss das Zusammenwirken der Position der Lichtquelle, der Position und des Winkels der Ebene des Polarisationsfilters, der Position und des Winkels (der Deformation) der Reflexionsebene und des Auges des Betrachters (Fahrers) beachtet werden. Dies kann sich bei jeweiligen Fällen deutlich unterscheiden und der optimale Winkel der Polarisationsebene gegenüber der Horizontalebene liegt theoretisch zwischen 0° und 90°. Bei SKODA-Fahrzeugen liegt dieser Winkel typisch zwischen 20° bis 70°.

Übersicht der Figuren der Zeichnungen

Die Fig. 1 zeigt die Reflexion eines homogenen Lichtes und seine Polarisation und die Fig. 2 zeigt die Reflexion des polarisierten Lichtes und seine Polarisation.

Ausführungsbeispiel der Erfindung

In einer Ausführung der Erfindung wird in die durchsichtige Deckscheibe des Kombiinstrumentes an der Schalttafel des Fahrzeuges eine Polarisationsschicht integriert. Mit dieser in der durchsichtigen Deckscheibe integrierten Polarisationsschicht werden die beiden runden Anzeiger und das Display des Kombiinstrumentes des Fahrzeuges abgedeckt. Die Neigung der Ebene des Polarisationsfilters gegenüber der Horizontalebene beträgt etwa 40°.

Diese Maßnahme kann bei allen Fahrzeugen angewendet werden, in denen die Fahrerposition gegenüber der Seitenscheibe oder anderen Scheiben (Frontscheibe) dem oben genannten Verhältnis entspricht.

**Patentansprüche**

**1.** Deckscheibe der Instrumentenanzeige im Fahrzeug, die im Kombiinstrument an der Schalttafel des Fahrzeuges angeordnet ist und zur Abdeckung der im Kombiinstrument des Fahrzeuges angeordneten Displays, Kontrollleuchten und Hinterleuchtung dient, **dadurch gekennzeichnet, dass** die Deckscheibe der Instrumentenanzeige eine Polarisationsschicht aufweist, die in der Deckscheibe integriert und für eine polarisierende Abdeckung des Kombiinstrumentes dient.

**Fig. 1**

**Fig. 2**